# EUROPÄISCHE PATENTANMELDUNG

(11) **EP 2 292 964 A2**
(43) Veröffentlichungstag der Anmeldung: **09.03.2011**
(21) Anmeldenummer: 10008446.6
(22) Anmeldetag: 13.08.2010
(51) Int. Cl.: F16L 23/08

(54) **Profilschelle**

(30) Priorität: 03.09.2009 DE 102009039862
(71) Anmelder: NORMA Germany GmbH, 63477 Maintal (DE)
(72) Erfinder: Hartig, Günther, Lambourn RG17 8YP (GB); Mann, Stephan, 63599 Bieber (DE)
(74) Vertreter: Knoblauch, Andreas

(57) **Zusammenfassung**

Es wird eine Profilschelle (1) angegeben mit mindestens zwei im Querschnitt eine Trapezform mit einer Basis (11) und zwei entgegengesetzt geneigten Schenkeln (12, 13) aufweisenden Schellenabschnitten (2, 3) und mindestens einem Gelenkabschnitt (4) zwischen jeweils zwei Schellenabschnitten (2, 3).

Man möchte eine Profilschelle auch bei Rohrverbindungen mit hohen Temperaturen einsatzfähig machen.

Hierzu ist vorgesehen, dass der Gelenkabschnitt (4) als Brücke (14) ausgebildet ist, die mit den Schellenabschnitten (2, 3) verbunden ist.

## Beschreibung

Die Erfindung betrifft eine Profilschelle mit mindestens zwei im Querschnitt eine Trapezform mit einer Basis und zwei entgegengesetzt geneigten Schenkeln aufweisenden Schellenabschnitten und mindestens einem Gelenkabschnitt zwischen jeweils zwei Schellenabschnitten.

Eine derartige Profilschelle wird verwendet, um zwei Rohre oder Rohrabschnitte miteinander zu verbinden. Die Rohre haben an den zu verbindenden Enden radial nach außen ragende Flansche, die an ihren Vorderseiten zusammenstoßen und an ihren Rückseiten konisch abgeschrägt sind. Wenn die Profilschelle um diese Flansche gelegt wird und die Profilschelle gespannt wird, dann ziehen die Schenkel der Trapezform die beiden Vorsprünge aufeinander zu und die Rohre sind aneinander befestigt.

Um die Profilschelle montieren zu können, muss man sie so weit aufweiten können, dass die Schenkel der Trapezform über die Vorsprünge der Rohre hinweg geführt werden können. Um diese Aufweitung zu ermöglichen, ist der Gelenkabschnitt zwischen zwei Schellenabschnitten vorgesehen. Dort ist die Profilschelle weich genug, um aufgebogen zu werden.

Eine derartige Profilschelle ist beispielsweise aus DE 198 18 562 C1 bekannt.

Um den Gelenkabschnitt zu bilden, werden die Schenkel aufgespreizt und etwa in die Ebene der Basis aufgebogen. Der Gelenkabschnitt ist damit abgesehen von einer Krümmung in Umfangsrichtung flach und kann somit verbogen werden, um die Schellenabschnitte weit genug voneinander entfernen zu können, um um die Vorsprünge der Rohre gelegt zu werden.

Diese Vorgehensweise erlaubt zwar eine relativ einfache Fertigung. Sie hat aber einen gewissen Nachteil zur Folge, wenn die Profilschelle bei Rohren verwendet wird, die im Normalfall einer hohen Temperatur ausgesetzt sind. Ein Beispiel für einen derartigen Anwendungsfall ist die Verwendung bei einer Auspuffanlage in einem Kraftfahrzeug. Hier herrschen Temperaturen in der Größenordnung von 800°C bis 1000°C. Diese Temperaturen führen dazu, dass sich die Rohre mit ihren Flanschen ausdehnen. Die Profilschelle, die Kontakt mit den Vorsprüngen der Rohre hat, wird zwar ebenfalls erwärmt. Im Bereich des Gelenkabschnitts weist die Profilschelle jedoch Flächen auf, die axial über die Vorsprünge der Rohre überstehen und über die Wärme an die Umgebung abgeführt werden kann. Zumindest in diesem Bereich besteht die Gefahr, dass die Temperatur der Profilschelle absinkt. Wenn die Profilschelle kälter ist als das Rohr mit seinen Vorsprüngen oder Flanschen, dann ist die durch Wärme bedingte Ausdehnung der Profilschelle geringer. Es kommt zu starken Spannungen in der Profilschelle, die im Extremfall zu einer plastischen Verformung der Profilschelle führen kann. Eine derartige plastische Verformung bildet sich beim Abkühlen nicht zurück, so dass sich im kalten Zustand eine lose Schelle mit einer entsprechend gelockerten Rohrverbindung ergibt.

Der Erfindung liegt die Aufgabe zugrunde, eine Profilschelle auch bei Rohrverbindungen mit hohen Temperaturen einsatzfähig zu machen.

Diese Aufgabe wird bei einer Profilschelle der eingangs genannten Art dadurch gelöst, dass der Gelenkabschnitt als Brücke ausgebildet ist, die mit den Schellenabschnitten verbunden ist.

Bei dieser Lösung trennt man die Profilschelle zwischen den Schellenabschnitten auf, verwendet also zwei voneinander getrennte Schellenabschnitte. Diese Schellenabschnitte werden durch ein zusätzliches Teil, der Brücke, miteinander verbunden. Dieses zusätzliche Teil kann aus einem anderen Material sein. Dieses Material ist vorzugsweise ein hochfestes Material, so dass durch die Brücke keine Schwächung der Profilschelle bewirkt wird. Bevorzugterweise sind sowohl die Schellenabschnitte als auch die Brücke aus Metall gebildet. An der Brücke lässt sich die Profilschelle aufbiegen, um sie um die Flansche oder Vorsprünge an den Enden der Rohre zu führen. Man kann die Brücke so dimensionieren, dass nur wenig Wärme von ihr in die Umgebung verloren geht.

Hierbei ist bevorzugt, dass die Brücke eine radiale Dicke aufweist, die kleiner ist als die radiale Dicke der Basis. Man kann die Brücke also relativ dünn ausbilden. Dies hat den zusätzlichen Vorteil, dass die Brücke leichter gebogen werden kann, um die Schelle zu öffnen. Die Kräfte, die man zur Montage benötigt, werden also klein gehalten.

Vorzugsweise weist die Brücke in einem Verbindungsbereich mit den Schellenabschnitten eine axiale Erstreckung auf, die maximal so groß ist wie die axiale Erstreckung der Basis. Damit steht jedenfalls im Verbindungsbereich die Brücke nicht über die Basis über. Man vermeidet damit unnötige Flächen, über die Wärme abgestrahlt werden könnte. Die Brücke kann dann auf einer höheren Temperatur gehalten werden, weil nicht so viel Wärme in die Umgebung verloren geht.

Bevorzugterweise ist die Brücke in einem Bereich, in dem sie einen Schellenabschnitt in Umfangsrichtung überlappt, frei von Ausformungen. Die Brücke bildet also in dem Überlappungsbereich sozusagen ein "Flachmaterial", das leicht befestigt werden kann. Da es hier keine Ausformungen gibt, werden die Biegeeigenschaften der Brücke nicht negativ beeinflusst.

Vorzugsweise ist die Brücke ausschließlich mit der Basis der Schellenabschnitte verbunden. Eine Verbindung mit den Schenkeln der Trapezform erfolgt also nicht. Dies ermöglicht es, dass man die Brücke auch dort verbiegt, wo sie bereits die Basis überlappt.

Bevorzugterweise weist die Brücke zwischen den Schellenabschnitten eine Einformung auf. Diese Einformung bewirkt, dass sich die Brücke an die Flansche oder Vorsprünge der Rohre annähert. Auf diese Weise wird ein Abstand zwischen der Brücke und den Flanschen der Rohre vermindert, so dass hier eine verbesserte Wärmeübertragung von den Flanschen der Rohre auf die Brücke möglich ist. Die Temperatur der Brücke kann dann an die Temperatur der Flansche angenähert werden.

Bevorzugterweise weist die Einformung eine radiale Erstreckung nach innen auf, die der radialen Dicke der Basis entspricht. Bei dieser Ausgestaltung kann man sogar dafür sorgen, dass nicht nur die Schellenabschnitte, sondern auch die Brücke an den Flanschen anliegt. Eine Wärmeübertragung von den Flanschen auf die Brücke ist dann nicht nur durch Strahlung möglich, sondern auch durch direkte Wärmeleitung.

Vorzugsweise ist die Einformung als Welle ausgebildet. Die Welle weist einen Scheitel auf, der im Wesentlichen parallel zur Achse der Profilschelle verläuft. Damit wird ermöglicht, dass die Brücke über einen relativ langen axialen Abschnitt an den Flanschen der Rohre anliegt.

Vorzugsweise weist die Brücke eine Krümmung auf, wobei die Krümmung eine Richtung aufweist, die der Richtung der Krümmung der Schellenabschnitte entspricht. Damit ist die Profilschelle sozusagen vorgespannt, d.h. die Brücke sorgt dafür, dass die Schellenabschnitte eine gewisse Vorspannung aufeinander zu haben. Man muss die Profilschelle dann zur Montage lediglich öffnen. Sobald man die Profilschelle loslässt, legt sie sich unter der Eigenspannung der Brücke an die Flansche der Rohre an.

Bevorzugterweise weist die Brücke mindestens einen radial nach innen gerichteten Vorsprung auf. Dieser Vorsprung kann verwendet werden, um bei der Herstellung der Profilschelle die Schellenabschnitte gegenüber der Brücke zu positionieren. Dies erleichtert die Herstellung.

Vorzugsweise weist die Brücke mindestens zwei Biegebereiche auf. Die beiden Biegebereiche sind vorzugsweise außerhalb der Mitte der Brücke in Umfangsrichtung angeordnet. Dies ergibt eine verbesserte Öffnungsbewegung der Profilschelle bei der Montage. Man muss die beiden Schellenabschnitte nicht mehr so weit voneinander wegbewegen, wie bei einer Ausgestaltung, die nur einen einzigen Biegebereich oder eine einzige Biegelinie aufweist.

Bevorzugterweise weist die Brücke zwischen den Biegebereichen mehr Material pro Umfangslänge auf als in Umfangsrichtung außerhalb der Biegebereiche. Dies ist eine technisch relativ einfache Möglichkeit, um die Biegebereiche zu erzeugen. Die Brücke verbiegt sich dort, wo mehr Material pro Umfangslänge angeordnet ist, weniger gut als in Bereichen mit weniger Material. Durch die Wahl der Materialverteilung ist es daher möglich, einzelne Biegebereiche oder sogar Biegelinien zu definieren.

Vorzugsweise weist die Brücke zwischen den Biegebereichen eine vergrößerte axiale Erstreckung auf. Dies ist eine relativ einfache Möglichkeit, um die Biegebereiche zu bilden. Man kann für die Brücke ein gleichförmig dickes Material verwenden, so dass die Brücke beispielsweise einfach aus einem Blech ausgestanzt werden kann.

Vorzugsweise ist die Brücke aus einem Material gebildet, das einen höheren Wärmeausdehnungskoeffizienten als das Material der Schellenabschnitte aufweist. In diesem Fall kann man auch dann, wenn die Temperatur der Brücke etwas niedriger ist als die Temperatur der Schellenabschnitte, dafür sorgen, dass die Ausdehnung der Schellenabschnitte und die Ausdehnung der Brücke, die durch Wärme bedingt ist, aneinander angenähert werden. Man kann die Brücke auch so dimensionieren, dass thermisch bedingte Spannungen minimiert werden.

Bevorzugterweise ist die Brücke mit den Schellenabschnitten durch eine Schweißverbindung verbunden, wobei die Schweißverbindung in Umfangsrichtung einen vorbestimmten Abstand zum Rand der Schellenabschnitte in Umfangsrichtung aufweist. Auch dies hat Vorteile beim Aufbiegen der Schelle zum Zwecke der Montage. Die Schellenabschnitte müssen nicht mehr so weit voneinander aufgebogen werden, weil die Brücke noch in Bereichen verformt werden kann, die die Schellenabschnitte überlappen.

Die Erfindung wird im Folgenden anhand von bevorzugten Ausführungsbeispielen in Verbindung mit der Zeichnung beschrieben. Hierin zeigen:
- Fig. 1: ein perspektivische Darstellung einer Profil- schelle,
- Fig. 2: die Profilschelle aus einem anderen Blickwin- kel,
- Fig. 3: eine erste Ausführungsform einer Brücke,
- Fig. 4: eine zweite Ausführungsform einer Brücke,
- Fig. 5: eine dritte Ausführungsform einer Brücke,
- Fig. 6: eine vierte Ausführungsform einer Brücke und
- Fig. 7: eine fünfte Ausführungsform einer Brücke.

Eine Profilschelle 1 weist im vorliegenden Fall zwei Schellenabschnitte 2, 3 auf, die durch einen Gelenkabschnitt 4 miteinander verbunden sind. Es können auch mehr als die dargestellten zwei Schellenabschnitten 2, 3 vorgesehen sein, wobei dann auch mehrere Gelenkabschnitte 4 vorgesehen sein können.

Der Gelenkabschnitt 4 ist an einem Ende der Schellenabschnitte 2, 3 in Umfangsrichtung angeordnet. Am anderen Ende der Schellenabschnitte 2, 3 ist ein Spannkopf 5 vorgesehen, der an jedem Schellenabschnitt eine Spannbacke 6, 7 aufweist. Die beiden Spannbacken 6, 7 sind durch einen Schraubbolzen 8 miteinander verbunden, der auf einer Seite einen Kopf 9 aufweist und mit seinem anderen Ende durch eine Mutter 10 geschraubt ist.

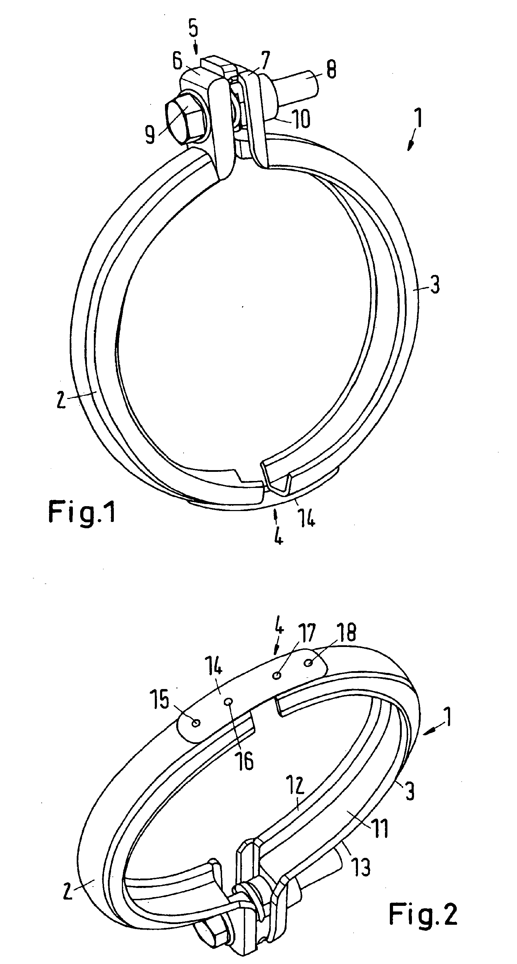

Wie insbesondere aus Fig. 2 zu erkennen ist, weisen die beiden Schellenabschnitte 2, 3 im Querschnitt eine Trapezform auf. Die Trapezform weist eine Basis 11 und zwei Schenkel 12, 13 auf, die gegenüber der Basis 11 einen Winkel von mehr als 90° einschließen. Dabei sind die beiden Schenkel 12, 13 in unterschiedliche Richtungen gegenüber der Basis 11 geneigt, d.h. sie öffnen sich von der Basis 11 weg.

Die beiden Schellenabschnitte sind vorzugsweise aus einem Metall gebildet, beispielsweise Stahl.

Der Gelenkabschnitt 4 ist als Brücke 14 ausgebildet, die radial außen auf die Basis 11 der beiden Schellenabschnitte 2, 3 aufgesetzt und mit jeweils zwei Schweißpunkten 15, 16 bzw. 17, 18 mit den Schellenabschnitten 2, 3 verbunden ist. Auch die Brücke 14 ist aus einem Metall gebildet, vorzugsweise Stahl. Das Material, aus dem die Brücke 14 gebildet ist, kann sich von dem Material unterscheiden, aus dem die Schellenabschnitte 2, 3 gebildet sind. Insbesondere kann das Material der Brücke 14 eine höhere Festigkeit aufweisen als das Material der Schellenabschnitte 2, 3. Die Brücke 14 kann daher eine Dicke (in radialer Richtung) aufweisen, die geringer ist als die Dicke der Basis 11 in radialer Richtung.

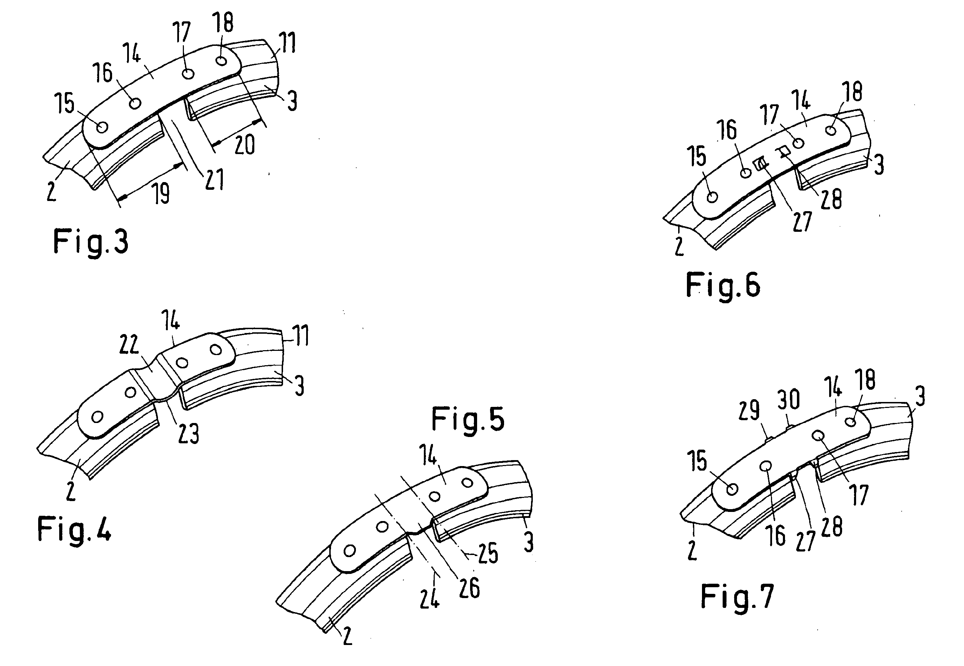

Fig. 3 zeigt in etwas vergrößerter Darstellung die Brücke, die mit Hilfe der Schweißpunkte 15-18 an den Schellenabschnitten 2, 3 befestigt ist. Es ist zu erkennen, dass die Brücke 14 in Axialrichtung eine Erstreckung aufweist, die maximal so groß ist wie die axiale Erstreckung der Basis 11. In einem Überlappungsbereich 19, 20 steht die Brücke 14 also in Axialrichtung nicht über die Basis 11 über. Dadurch werden im Überlappungsbereich 19, 20 freie Flächen vermieden, über die eine Wärmeabstrahlung von der Brücke 14 in die Umgebung erfolgen könnte. Die zur Verfügung stehende Fläche ist, wenn man von der Lücke 21 zwischen den beiden Schellenabschnitten 2, 3 absieht, genauso groß wie die ansonsten durch die Schellenabschnitte 2, 3 gebildete Fläche.

Die Brücke 14 ist vorgebogen, d.h. sie weist bereits eine Krümmung auf, die der Krümmung der Schellenabschnitte 2, 3 entspricht. Dadurch wird die Profilschelle 1 in einen Montagezustand vorgespannt, d.h. die beiden Schellenabschnitte 2, 3 sind durch die Brücke 14 im unbelasteten Zustand bereits so gehalten, dass ihre Spannbacken 6, 7 einen Abstand aufweisen, der einer späteren Montagestellung an einer Rohrverbindung entspricht. Man muss die beiden Spannbacken 6, 7 zur Montage also voneinander wegbewegen und dadurch die Profilschelle 1 aufbiegen. Sobald man die Spannbacken 6, 7 oder die beiden Schellenabschnitte 2, 3 loslässt, bewegen sich die Schellenabschnitte 2, 3 in die gewünschte Stellung, in der sie nicht näher dargestellte Flansche an Rohren umgreifen und in Axialrichtung aufeinander zu bewegen. Durch Anziehen des Schraubbolzens 8 kann man dann eine vorgegebene Spannkraft erreichen.

Wie oben ausgeführt, ist die Brücke 14 relativ dünn, dafür aber aus einem hochfesten Material. Dies erleichtert es, die Brücke elastisch zu verbiegen, so dass die Montage relativ einfach ist und keine größeren Kräfte benötigt werden, um die Profilschelle 1 zu öffnen.

Die Brücke 14 ist ausschließlich mit der Basis 11 der Schellenabschnitte 2, 3 verbunden. Sie weist auch in den Überlappungsbereichen 19, 20 keine Ausformungen auf. Im Grunde ist die Brücke 14 hier als Flachmaterial ausgebildet, das einfach hergestellt und gehandhabt werden kann. Die Herstellung der Brücke 14 kann beispielsweise dadurch erfolgen, dass die Brücke 14 aus einem Blech ausgestanzt wird.

Fig. 4 zeigt eine zweite Ausführungsform der Brücke 14. Gleiche und einander entsprechende Elemente sind mit den gleichen Bezugszeichen versehen. Die Brücke 14 der Fig. 4 unterscheidet sich von der Brücke 14 der Fig. 3 dadurch, dass die Brücke 14 eine Einformung 22 aufweist, die als radial nach innen gerichtete Welle ausgebildet ist. Die Einformung 22 weist eine Scheitellinie 23 auf, die in Axialrichtung durchgeht. Die Einformung 22 weist eine radiale Erstreckung nach innen auf, die etwa der Dicke der Basis 11 entspricht. Wenn die Profilschelle 1 montiert ist, dann liegt die Einformung 22 zumindest mit ihrer Scheitellinie 23 an den Flanschen der zu verbindenden Rohre an, so dass eine Wärmeübertragung von den Flanschen auf die Brücke 14 auch über die Einformung 22 erfolgen kann.

Im Übrigen ist die Brücke 14 genauso ausgebildet wie bei der Ausführungsform der Fig. 3, d.h. sie liegt flach an der jeweiligen Basis der Schellenabschnitte 2, 3 an und ist mit Schweißpunkten 15-18 mit den Schellenabschnitten 2, 3 verbunden.

Bei der Ausgestaltung der Fig. 5 weist die Brücke zwei ausgeprägte Biegebereiche auf, die hier der Einfachheit halber als Biegelinien 24, 25 dargestellt sind. Diese Biegelinien 24, 25 ergeben sich auf einfache Weise dadurch, dass die Brücke zwischen den beiden Biegelinien eine vergrößerte axiale Erstreckung 26 aufweist. Damit weist die Brücke 14 zwischen den beiden Biegelinien 24, 25 mehr Material pro Umfangslänge auf als in Umfangsrichtung außerhalb der Biegelinien 24, 25. Je mehr Material die Brücke 14 pro Umfangslänge aufweist, desto größer ist ihr Widerstand gegen eine Verformung oder Verbiegung. Durch die Vergrößerung der axialen Erstreckung 26 zwischen den beiden Biegelinien 24, 25 lässt sich erreichen, dass die Brücke 14 vielmehr an den Biegelinien 24, 25 verformt wird. In Umfangsrichtung weiter außerhalb ist die Verformung durch die beiden Schellenabschnitte 2, 3 behindert. Zwischen den beiden Biegelinien 24, 25 ist die Verformung durch die größere Materialansammlung behindert. Dementsprechend ergeben sich sozusagen zwei Bereiche, an denen die Brücke 14 verbogen wird, wenn die Profilschelle 1 geöffnet wird.

Die kleine vergrößerte Ersteckung 26 ist für die Wärmebilanz von untergeordneter Bedeutung. Die zusätzliche Wärme, die hier abgestrahlt werden kann, fällt nicht nennenswert ins Gewicht.

Bei der Ausgestaltung der Fig. 6 weist die Brücke 14 zwei radial nach innen gedrückte Nasen 27, 28 auf, die als Montagehilfe dienen. Bevor die Schweißpunkte 15-18 erzeugt werden, werden die beiden Schellenabschnitte 2, 3 in Umfangsrichtung bis zum Anschlag an die Nasen 27, 28 bewegt und dort festgehalten. Damit erreicht man auf einfache Weise eine präzise räumliche Zuordnung zwischen der Brücke 14 und den Schellenabschnitten 2, 3. Bei der Ausgestaltung der Fig. 7 verwendet man ebenfalls Nasen 27, 28 und 29, 30, die im Unterschied zur Ausgestaltung nach Fig. 6 nicht aus der axialen Mitte der Brücke 14 herausgedrückt worden sind, sondern durch Vorsprünge an den axialen Rändern gebildet sind, die radial nach innen umgebogen werden. Die Aufgabe ist die gleiche, d.h. die Nasen 27-30 bilden jeweils einen Anschlag für die Schellenabschnitte 2, 3, bevor die Schweißpunkte 15-18 erzeugt werden.

Aus Gründen der Übersicht sind in den einzelnen Ausführungsbeispielen der Fig. 3 bis 7 jeweils nur einzelne Merkmale der Brücke 14 dargestellt. Man kann aber die einzelnen Merkmale auch miteinander kombinieren, also beispielsweise die Einformung 22 mit der axialen Erstreckung 26 versehen und zusätzlich Nasen 27-30 vorsehen.

In allen Fällen kann man die Brücke 14 aus einem Material bilden, das einen höheren Wärmeausdehnungskoeffizienten als das Material der Schellenabschnitte 2, 3 aufweist.

Auch kann man in allen Ausgestaltungen die Brücke 14 mit den Schellenabschnitten 2, 3 so verbinden, dass zwischen den in Umfangsrichtung inneren Schweißpunkten 16, 17 und den einander gegenüberliegenden Enden der Schellenabschnitte 2, 3 ein vorbestimmter Abstand gegeben ist. Dieser Abstand kann dann zusätzlich zum Aufbiegen der Schellenabschnitte 2, 3 verwendet werden.

## Patentansprüche

1. Profilschelle (1) mit mindestens zwei im Querschnitt eine Trapezform mit einer Basis (11) und zwei entgegengesetzt geneigten Schenkeln (12, 13) aufweisenden Schellenabschnitten (2, 3) und mindestens einem Gelenkabschnitt (4) zwischen jeweils zwei Schellenabschnitten (2, 3), **dadurch gekennzeichnet, dass** der Gelenkabschnitt (4) als Brücke (14) ausgebildet ist, die mit den Schellenabschnitten (2, 3) verbunden ist.

2. Profilschelle nach Anspruch 1, **dadurch gekennzeichnet, dass** die Brücke (14) eine radiale Dicke aufweist, die kleiner ist als die radiale Dicke der Basis (11).

3. Profilschelle nach Anspruch 1 oder 2, **dadurch gekennzeichnet, dass** die Brücke (14) in einem Verbindungsbereich (19, 20) mit den Schellenabschnitten (2, 3) eine axiale Erstreckung aufweist, die maximal so groß ist wie die axiale Erstreckung der Basis (11).

4. Profilschelle nach Anspruch 3, **dadurch gekennzeichnet, dass** die Brücke (14) in einem Bereich, in dem sie einen Schellenabschnitt (2, 3) in Umfangsrichtung überlappt, frei von Ausformungen ist.

5. Profilschelle nach einem der Ansprüche 1 bis 4, **dadurch gekennzeichnet, dass** die Brücke (4) ausschließlich mit der Basis (11) der Schellenabschnitte (2, 3) verbunden ist.

6. Profilschelle nach einem der Ansprüche 1 bis 5, **dadurch gekennzeichnet, dass** die Brücke (14) zwischen den Schellenabschnitten (2, 3) eine Einformung (22) aufweist.

7. Profilschelle nach Anspruch 6, **dadurch gekennzeichnet, dass** die Einformung (22) eine radiale Erstreckung nach innen aufweist, die einer radialen Dicke der Basis (11) entspricht.

8. Profilschelle nach Anspruch 6 oder 7, **dadurch gekennzeichnet, dass** die Einformung (22) als Welle ausgebildet ist.

9. Profilschelle nach einem der Ansprüche 1 bis 8, **dadurch gekennzeichnet, dass** die Brücke (14) eine Krümmung aufweist, wobei die Krümmung eine Richtung aufweist, die der Richtung der Krümmung der Schellenabschnitte (2, 3) entspricht.

10. Profilschelle nach einem der Ansprüche 1 bis 9, **dadurch gekennzeichnet, dass** die Brücke (14) mindestens einen radial nach innen gerichteten Vorsprung (27-30) aufweist.

11. Profilschelle nach einem der Ansprüche 1 bis 10, **dadurch gekennzeichnet, dass** die Brücke (14) mindestens zwei Biegebereiche (24, 25) aufweist.

12. Profilschelle nach Anspruch 11, **dadurch gekennzeichnet, dass** die Brücke (14) zwischen den Biegebereichen (24, 25) mehr Material pro Umfangslänge aufweist als in Umfangsrichtung außerhalb der Biegebereiche (24, 25).

13. Profilschelle nach Anspruch 12, **dadurch gekennzeichnet, dass** die Brücke (14) zwischen den Biegebereichen (24, 25) eine vergrößerte axiale Erstreckung (26) aufweist.

14. Profilschelle nach Anspruch 13, **dadurch gekennzeichnet, dass** die Brücke (14) aus einem Material gebildet ist, das einen höheren Wärmeausdehnungskoeffizienten als das Material der Schellenabschnitte (2, 3) aufweist.

15. Profilschelle nach einem der Ansprüche 1 bis 14, **dadurch gekennzeichnet, dass** die Brücke (14) mit den Schellenabschnitten (2, 3) durch eine Schweißverbindung (15-18) verbunden ist, wobei die Schweißverbindung in Umfangsrichtung einen vorbestimmten Abstand zum Rand der Schellenabschnitte (2, 3) in Umfangsrichtung aufweist.
